# EUROPEAN PATENT SPECIFICATION

(11) **EP 2 498 979 B1**
(45) Date of publication and mention of the grant of the patent: **06.01.2016**
(21) Application number: 10771576.5
(22) Date of filing: 05.10.2010
(51) Int. Cl.: B29C 70/34, B29C 70/54, B29C 33/40

(54) **MICROPLEATED VACUUM BAG AND SEAL METHOD FOR COMPOSITE PARTS**
MIKROPLATTIERTER VAKUUMBEUTEL UND VERFAHREN ZUR VERSIEGELUNG VON VERBUNDTEILEN
POCHE À VIDE À MICROPLIS ET PROCÉDÉ DE SCELLEMENT ÉTANCHE POUR PIÈCES COMPOSITES

(30) Priority: 12.11.2009 US 617056
(43) Date of publication of application: 19.09.2012
(73) Proprietor: The Boeing Company, Chicago, IL 60606-2016 (US)
(72) Inventor: NELSON, Paul, E., University Place Washington 98466 (US)
(74) Representative: Witte, Weller & Partner Patentanwälte mbB
(86) International application number: PCT/US2010/051502
(87) International publication number: WO 2011/059602

(56) References cited:
- DE-A1- 10 105 976
- US-A- 5 123 985
- US-A- 5 129 813
- LUNN ET AL: "Cost-effective resin infusion", REINFORCED PLASTICS, ELSEVIER ADVANCED TECHNOLOGY, NEW YORK, NY, US, vol. 53, no. 1, 1 January 2009 (2009-01-01), pages 38-39, XP026266133, ISSN: 0034-3617, DOI: DOI:10.1016/S0034-3617(09)70047-5 [retrieved on 2009-01-01]

## Description

### TECHNICAL FIELD

The disclosure relates to vacuum bags suitable for sealing a composite part on a curing tool while curing the part.

### BACKGROUND

Composite parts may be enclosed in a vacuum bag for curing. When a three-dimensional part is bagged with sheet bagging material, it may be necessary to manually form several pleats in the bag during installation of the bag over the part. A vacuum bag which covers a composite part such as a curved body frame may have 30 such pleats. Each such manually formed pleat may serve as a potential leak path during curing of the part Also, in some circumstances, a double bag seal is beneficial. This arrangement enables a vacuum leak check to be performed, prior to curing, by drawing a vacuum between the double seals. The double seal arrangement causes more difficulty in forming manual pleats.

Pleating may not be required for reusable elastomeric bags which are fabricated in a three-dimensional shape to fit a specific part. For disposable bags, the number of pleats may be reduced by cutting the bagging material in a particular flat pattern. For instance, body frame bagging may require fewer pleats if the bag is cut into an arc segment rather than a rectangle. However, this technique may waste bagging material and require splices in the bag when the sheets are not big enough to contain the flat pattern.

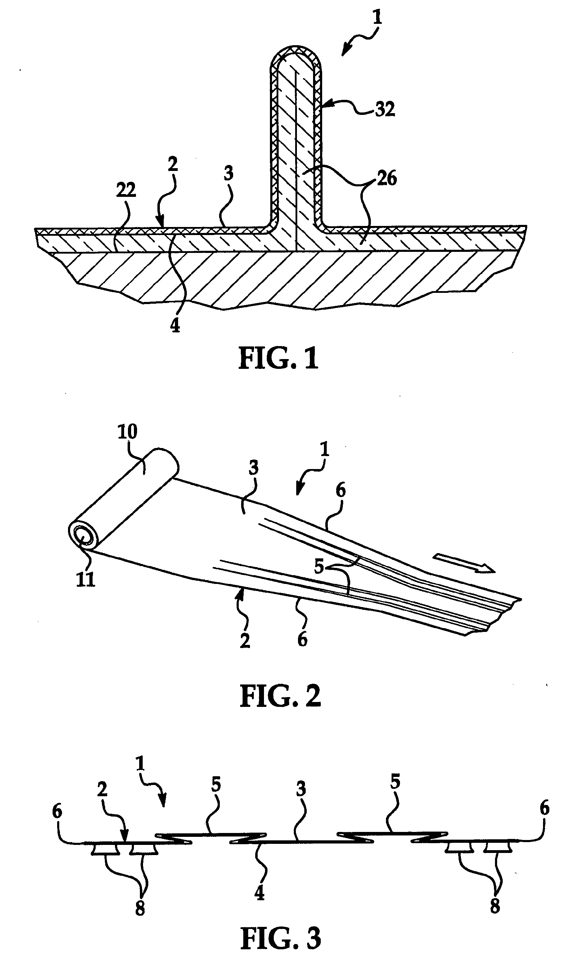

Referring initially to FIG. 1, in some applications one or more manually-formed pleats 32 may be formed in the bag sheet 2 of the vacuum bag 1 to generally conform or accommodate the vacuum bag 1 to the size and shape of the curing tool 22, as deemed necessary. Seal tape 26 may be provided between the bag sheet 2 and the curing tool 22 and within each manually-formed pleat 32. Any number of manually-formed pleats 32 may be formed in the bag sheet 2 depending on the size and shape of the curing tool 22.

Therefore, improved methods of bagging composite parts for curing are needed.

### SUMMARY

The disclosure is generally directed to a micropleated vacuum bag. An illustrative embodiment of the micropleated vacuum bag includes a bag sheet, at least one seal ribbon carried by the bag sheet and a plurality of micropleats extending into the bag sheet and the at least one seal ribbon.

The disclosure is further generally directed to a kitting apparatus for pressing micropleats into a bag sheet and at least one seal ribbon of a vacuum bag. An illustrative embodiment of the kitting apparatus includes at least one seal ribbon spool, at least one seal ribbon wound on the at least one seal ribbon spool, a bag sheet of a vacuum bag and at least one pleating wheel engaging the bag sheet and the at least one seal ribbon and adapted to press micropleats into the bag sheet and the at least one seal ribbon. The vacuum bagging for composite parts also includes other components, such as release film, breather material and vacuum probes, such as is known in the art.

The disclosure is further generally directed to a seal method. An illustrative embodiment of the seal method includes providing a vacuum bag, providing at least one seal ribbon along the vacuum bag and forming micropleats by pressing the vacuum bag into the at least one seal ribbon.

In some embodiments, the micropleated vacuum bag may include a bag spool; a generally elongated, rectangular bag sheet having a pair of bag edges wound on the bag spool; a pair of seal ribbons carried by the bag sheet and extending generally along each of the pair of bag edges; a plurality of micropleats extending into the bag sheet and each of the pair of seal ribbons; and a plurality of lengthwise pleats provided in the bag sheet generally between the pair of bag edges.

In some embodiments, the kitting apparatus may include a pair of seal ribbon spools; a pair of seal ribbons wound on each of the pair of seal ribbon spools; a bag spool; a bag sheet of a vacuum bag wound on the bag spool; a press roller receiving the at least one seal ribbon and the bag sheet; and a plurality of pleating wheels each having a pleating wheel hub and a plurality of pleating wheel blades extending from the pleating wheel hub disposed in adjacent relationship to the press roller and engaging the bag sheet and the pair of seal ribbons and adapted to press micropleats into the bag sheet and the pair of seal ribbons against the press roller.

In some embodiments, the seal method may include providing a vacuum bag having bag edges; providing a pair of seal ribbons on the vacuum bag along each of the bag edges; providing a plurality of lengthwise pleats in the vacuum bag; forming micropleats by providing a plurality of pleating wheels and applying the pleating wheels against the vacuum bag and the seal ribbons; providing a curing tool; placing a composite part having a curvature on the curing tool; placing the vacuum bag over the composite part; steering the vacuum bag around the curvature; sealing the vacuum bag against the curing tool around the composite part; and curing the composite part.

US 5,129,813 discloses a vacuum bag including a non-porous material having impressed therein a three-dimensional pattern which defines a plurality of interconnected channels.

US 5,123,985 discloses that thermoplastic elastomer film bags are provided which readily conform to the surface contour of the workpiece at low temperatures without failure.

### BRIEF DESCRIPTION OF THE ILLUSTRATIONS

FIG. 1 is a cross-sectional view of an illustrative embodiment of a vacuum bag, with a manually-formed pleat formed in the bag to generally conform the bag to the size and shape of a curing tool.
FIG. 2 is a perspective view, partially in section, of an illustrative embodiment of the micropleated vacuum bag.
FIG. 3 is an end view of an illustrative embodiment of the micropleated vacuum bag.
FIG. 4 is a schematic perspective view of a seal pleating apparatus suitable for applying micropleats to a vacuum bag in fabrication of an illustrative embodiment of the micropleated vacuum bag.
FIG. 5 is a side view illustrating application of micropleats to a bag sheet of a vacuum bag and to a seal ribbon as the seal ribbon is attached to the bag sheet.
FIG. 6 is an end view of an illustrative embodiment of the micropleated vacuum bag, sealed against a curing tool with a composite part (shown in phantom) sealed between the curing tool and the bag.
FIG. 7 is a top view, partially in section, of an illustrative embodiment of the micropleated vacuum bag, placed on a curing tool (partially in section) with micropleats in the bag extending along a curvature in a composite part (shown in phantom).
FIG. 8 is a flow diagram of an illustrative embodiment of a seal method.
FIG. 9 is a cross-sectional view of an illustrative embodiment of the micropleated vacuum bag sealing a composite part on a curing tool with lengthwise pleats in the bag generally conforming the bag to the size and shape of the composite part.
FIG. 10 is a cross-sectional view of an illustrative embodiment of the micropleated vacuum bag enclosing a composite part for curing of the part.
FIG. 11 is a flow diagram of an aircraft production and service methodology.
FIG. 12 is a block diagram of an aircraft.

### DETAILED DESCRIPTION

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to practice the disclosure and are not intended to limit the scope of the claims. Furthermore, there is no intention to be bound by any expressed or implied theory presented in the preceding technical field, background, brief summary or the following detailed description.

Referring now to FIGS. 2-5, an illustrative embodiment of the micropleated vacuum bag is generally indicated by reference numeral 1. The micropleated vacuum bag 1 may include a bag sheet 2 which may be a crinkled bag film, nylon or any other type of material that is suitable for vacuum sealing applications. In some embodiments, the bag sheet 2 may be generally elongated and rectangular with a pair of spaced-apart bag edges 6, an exposed surface 3 and a sealing surface 4, which is opposite the exposed surface 3. In other embodiments, the bag sheet 2 may have other configurations. At least one lengthwise pleat 5 may be formed in the bag sheet 2 between the bag edges 6 according to the knowledge of those skilled in the art. One or multiple lengthwise pleats 5 may be disposed in generally parallel relationship with respect to each other and the longitudinal axis of the bag sheet 2.

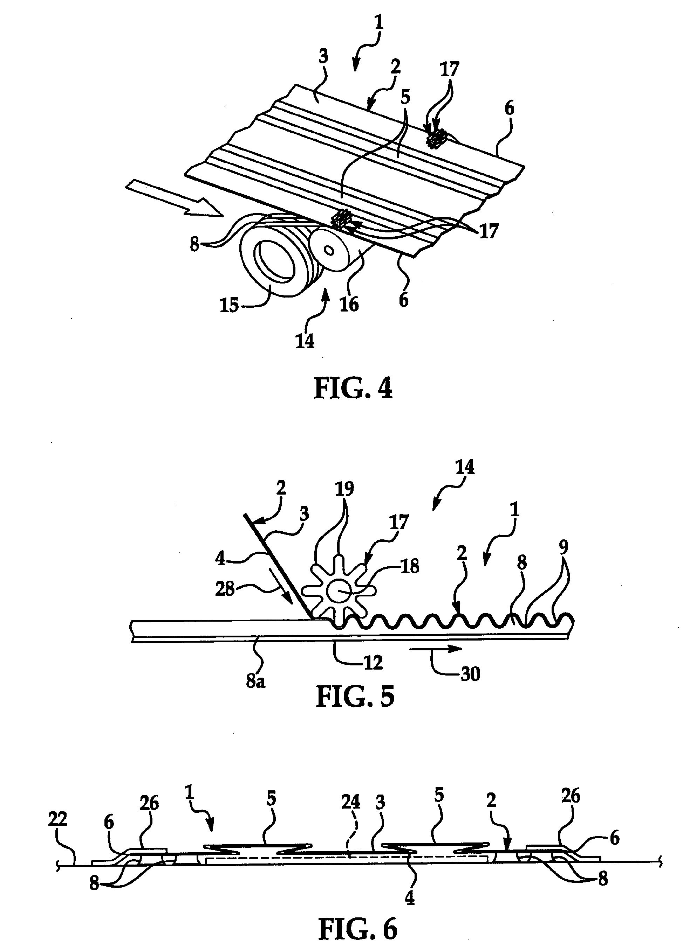

At least one seal ribbon 8 may be provided on the sealing surface 4 along each bag edge 6 of the bag sheet 2. In some embodiments, a pair of seal ribbons 8 may be provided on the sealing surface 4 in generally parallel, spaced-apart relationship with respect to each other. As shown in FIG. 5, each seal ribbon 8 may have an adhesive surface 8a which is covered by a removable backing paper 12. As shown in FIG. 5, micropleats 9 may extend into the bag sheet 2 and each seal ribbon 8 for purposes which will be hereinafter described.

An exemplary kitting apparatus 14 which is suitable for forming the micropleats 9 in the bag sheet 2 and each seal ribbon 8 is shown schematically in FIGS. 4 and 5. In some embodiments, the kitting apparatus 14 may include a pair of seal ribbon spools 15 (one of which is shown in FIG. 4) on which is wound a single seal ribbon 8 or pair of seal ribbons 8, as shown. As shown in FIG. 2, in some applications the bag sheet 2 of the vacuum bag 1 may be dispensed generally over or adjacent to the seal ribbon spools 15 from a bag roll 10 which is wound on a bag spool 11. In other applications, the bag sheet 2 may be dispensed generally over or adjacent to the seal ribbon spools 15 using other suitable dispensing techniques known to those skilled in the art. The seal ribbon spools 15 may be positioned generally beneath or adjacent to the respective bag edges 6 of the bag sheet 2. Each seal ribbon spool 15 may be suitably adapted and positioned to dispense each seal ribbon 8 or pair of seal ribbons 8 as each seal ribbon 8 is pressed against the sealing surface 4 of the bag sheet 2 at the micropleats 9, as will be hereinafter described.

At least one pleating wheel 17 may be adapted to press the micropleats 9 into the bag sheet 2 and into each corresponding underlying or adjacent seal ribbon 8. As shown in FIG. 4, a press roller 16 may be suitably adapted and positioned to apply opposing pressure to the seal ribbons 8 as the pleating wheels 17 press the micropleats 9 into the bag sheet 2 and the respective seal ribbons 8. As shown in FIG. 5, in some applications each pleating wheel 17 may have a pleating wheel hub 18 which may be rotatably mounted on a suitable wheel support frame (not shown). Multiple, rounded pleating wheel blades 19 may extend outwardly from the pleating wheel hub 18 in circumferentially spaced-apart relationship with respect to each other. Each pleating wheel 17 may be selected such that the width of the pleating wheel blades 19 may generally correspond to the width of each micropleat 9 which is to be pressed into the bag sheet 2 and seal ribbon 8. The wheel support frame (not shown) on which the pleating wheels 17 are mounted may be adapted to apply pressure against the pleating wheel hub 18 in such a manner that the pleating wheel blades 19 of each pleating wheel 17 progressively press the micropleats 9 into the bag sheet 2 and the adjacent seal ribbon 8 as the bag sheet 2 is gradually dispensed from the bag spool 11 (FIG. 2), as indicated by the arrow 28 in FIG. 5 and as the seal ribbons 8 are gradually dispensed from the seal ribbon spool 15, as indicated by the arrow 30 in FIG. 5. The foregoing description of the kitting apparatus 14 is exemplary only and any type of apparatus which is suitable for forming the micropleats 9 in the bag sheet 2 and each seal ribbon 8 may be used for the purpose.

In an exemplary method of fabricating the micropleated vacuum bag 1 using the kitting apparatus 14, the bag sheet 2 is gradually dispensed from the bag roll 10 (FIG. 2) on the bag spool 11 as each seal ribbon 8 is gradually dispensed from the corresponding seal ribbon spool 15. Each pleating wheel 17 applies pressure to the bag sheet 2 and the corresponding underlying or adjacent seal ribbon 8 against the press roller 16. This action causes the pleating wheel blades 19 of the pleating wheel 17 to progressively press the adjacent micropleats 9 into the bag sheet 2 and the seal ribbon 8, attaching the bag sheet 2 to the seal ribbon 8 at the micropleats 9. The lengthwise pleats 5 may be formed in the bag sheet 2 at the same time the micropleats 9 are pressed into the bag sheet 2 and the seal ribbons 8. After the desired length of bag sheet 2 has been dispensed from the bag roll 10 (FIG. 2), the bag sheet 2 may be cut from the bag roll 10 using techniques known to those skilled in the art. In some applications, the micropleated vacuum bag 1 may be kitted individually for each need.

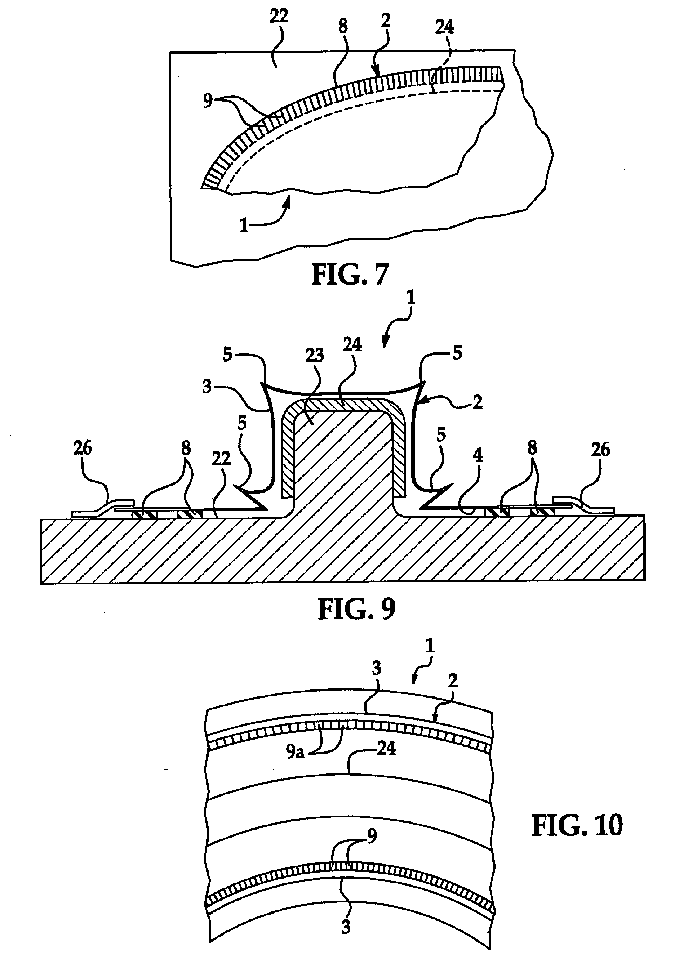

Referring next to FIGS. 6 and 7, in some applications the micropleated vacuum bag 1 may be used to seal a composite part 24 (shown in phantom) against a curing tool 22 to facilitate curing of the composite part 24. Accordingly, the composite part 24 may initially be placed on the curing tool 22. After removal of the backing paper 12 (FIG. 5) from the adhesive surface 8a of each seal ribbon 8, the micropleated vacuum bag 1 may then be placed over the composite part 24. The adhesive surface 8a of each seal ribbon 8 may be pressed against the curing tool 22. The bag edges 6 of the bag sheet 2 of the micropleated vacuum bag 1 may be sealed against the curing tool 22 using seal tape 26. After curing of the composite part 24, the bag sheet 2 may be detached from the curing tool 22 and the composite part 24 removed from the curing tool 22. The micropleated vacuum bag 1 is suitable for a variety of alternative sealing applications.

As shown in FIG. 7, it will be appreciated by those skilled in the art that the presence of the micropleats 9 in the bag sheet 2 and each seal ribbon 8 at the bag edges 6 of the bag sheet 2 enables steering of the micropleated vacuum bag 1 around a curvature in the composite part 24 or along a curved track (not shown) as the micropleated vacuum bag 1 is applied over the composite part 24. The micropleats 9 may enable steering of the micropleated vacuum bag 1 around curvatures having various radii. Consequently, the need to cut or reshape the bag sheet 2 from a rectangular configuration to a configuration which is suitable to fit the curvature of the composite part 24 may be eliminated. This expedient may save time, labor and bagging material which is needed to implement the curing or other process. Because the seal ribbons 8 may be applied to the bag sheet 2 in one step, the manual pleats along the bag edges 6 of the bag sheet 2 may be omitted. Additionally, the usual step of applying the seal ribbon 8 to the curing tool 22 may not be necessary. In some embodiments, the micropleated vacuum bag 1 may be rectangular and therefore, any arbitrary length may be rolled up as needed. Moreover, the micropleated vacuum bag 1 may be installed on curved tools without the typical manually formed pleats.

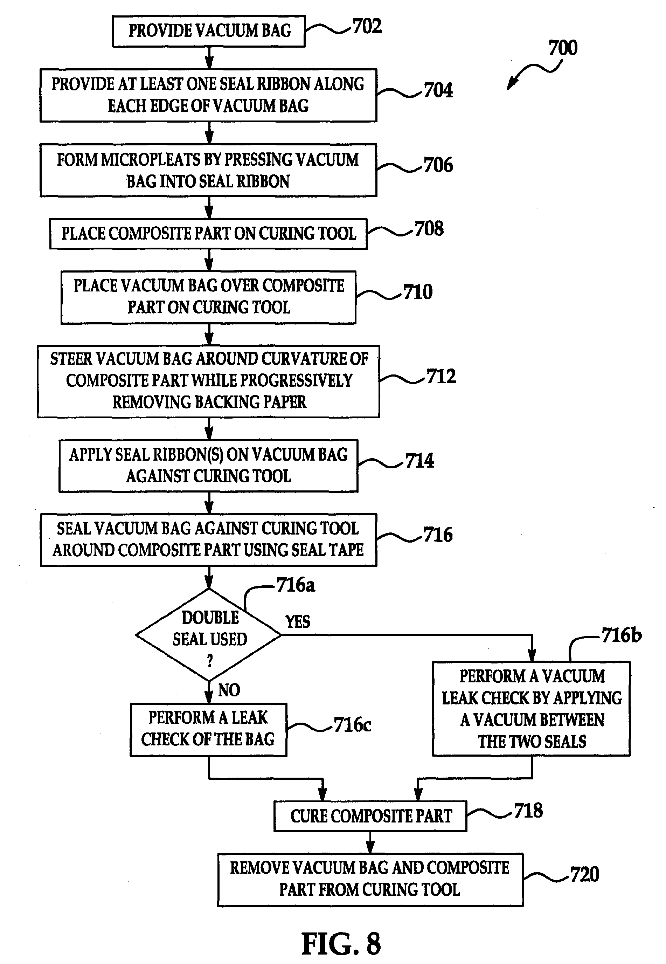

Referring next to FIG. 8, a flow diagram 700 of an illustrative embodiment of a seal method is shown. In block 702, a vacuum bag may be provided. In block 704, at least one seal ribbon may be provided along each edge of the vacuum bag. In block 706, micropleats may be formed by pressing the vacuum bag into each seal ribbon. In some embodiments, at least one lengthwise pleat may be provided in the vacuum bag. In some embodiments, the micropleats may be provided in the vacuum bag and each seal ribbon by applying a pleating wheel against the vacuum bag and the seal ribbon. In block 708, a composite part may be placed on a curing or other tool. In block 710, the vacuum bag may be placed over the composite part on the curing or other tool. In block 712, the vacuum bag may be steered around one or more curvatures in the composite part, as needed. Backing paper may be progressively removed from the vacuum bag during this step. In block 714, the seal ribbons on the vacuum bag may be applied against the tool. In block 716, the vacuum bag may be sealed against the curing tool around the composite part using seal tape. In block 716a, a determination may be made as to whether a double seal is used. If a double seal is used, in block 716b a vacuum leak check may be performed by applying a vacuum between the two seals and the method may resume in block 718. If a double seal is not used, in block 716c a leak check of the bag may be performed and the method may resume in block 718. In block 718, the composite part may be cured. In block 720, the vacuum bag and the cured composite part may be removed from the curing tool.

Referring next to FIG. 9, in some applications the composite part 24 may be placed on a support 23 which extends from the surface of the curing tool 22 for curing of the composite part 24. The bag sheet 2 of the micropleated vacuum bag 1 may be placed over the composite part 24 and sealed against the curing tool 22 using seal tape 26. Lengthwise pleats 5 in the bag sheet 2 of the micropleated vacuum bag 1 may generally conform or accommodate the bag sheet 2 to the size and shape of the composite part 24.

Referring next to FIG. 10, in some applications the composite part 24 may be enclosed or enveloped in the micropleated vacuum bag 1 for curing of the composite part 24. Accordingly, during installation of the micropleated vacuum bag 1, in the event that the composite part 24 has a curved shape in cross-section, as shown, the micropleats 9a on one side of the micropleated vacuum bag 1 may stretch whereas the micropleats 9 on the opposite side of the micropleated vacuum bag 1 may remain in an unstretched state to conform or accommodate the curvature of the micropleated vacuum bag 1 to the curvature of the composite part 24.

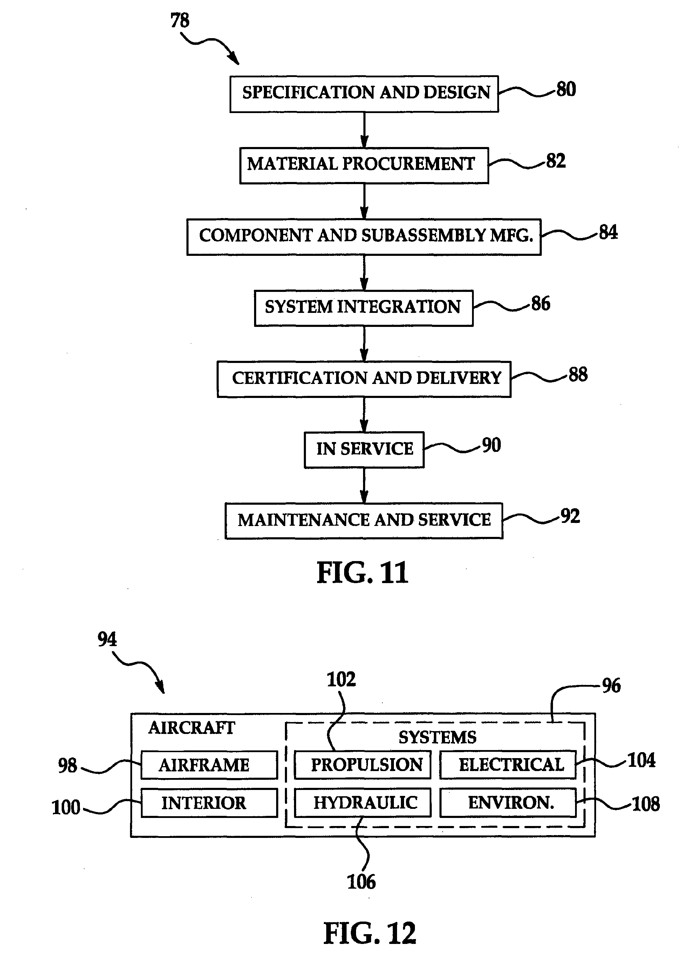

Referring next to FIGS. 11 and 12, FIG. 11 shows an aircraft manufacturing and service method 78 and FIG. 12 shows an aircraft 94. During pre-production, exemplary method 78 may include specification and design 80 of the aircraft 94 and material procurement 82. During production, component and subassembly manufacturing 84 and system integration 86 of the aircraft 94 takes place. Thereafter, the aircraft 94 may go through certification and delivery 88 in order to be placed in service 90. While in service by a customer, the aircraft 94 may be scheduled for routine maintenance and service 92 (which may also include modification, reconfiguration, refurbishment, and so on).

Each of the processes of method 78 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 12, the aircraft 94 produced by exemplary method 78 may include an airframe 98 with a plurality of systems 96 and an interior 100. Examples of high-level systems 96 include one or more of a propulsion system 102, an electrical system 104, a hydraulic system 106, and an environmental system 108. Any number of other systems may be included. Although an aerospace example is shown, the principles of the disclosure may be applied to other industries, such as the automotive industry.

The apparatus embodied herein may be employed during any one or more of the stages of the production and service method 78. For example, components or subassemblies corresponding to production process 84 may be fabricated or manufactured in a manner similar to components or subassemblies produced while the aircraft 94 is in service. Also one or more apparatus embodiments may be utilized during the production stages 84 and 86, for example, by substantially expediting assembly of or reducing the cost of an aircraft 94. Similarly, one or more apparatus embodiments may be utilized while the aircraft 94 is in service, for example and without limitation, to maintenance and service 92.

Although the embodiments of this disclosure have been described with respect to certain exemplary embodiments, it is to be understood that the specific embodiments are for purposes of illustration and not limitation, as other variations will occur to those of skill in the art.

## Claims

1. A micropleated vacuum bag (1), comprising:
a bag sheet (2); and
at least one seal ribbon (8) carried by said bag sheet (2); **characterized by**
a plurality of micropleats (9) extending into said bag sheet (2) and said at least one seal ribbon (8), wherein the plurality of micropleats (9) are pressed into the bag sheet (2) and the at least one seal ribbon (8) with a pleating wheel (17).

2. The micropleated vacuum bag of claim 1. wherein said bag sheet (2) comprises a pair of bag edges (6) and said at least one seal ribbon (8) comprises at least one seal ribbon (8) extending generally along each of said pair of bag edges (6).

3. The micropleated vacuum bag of claim 2 wherein said at least one seal ribbon (8) extending generally along each of said pair of bag edges (6) comprises a pair of seal ribbons (8) extending generally along each of said pair of bag edges (6).

4. The micropleated vacuum bag of claim 1 further comprising at least one lengthwise pleat (5) provided in said bag sheet (2).

5. The micropleated vacuum bag of claim 4, wherein said at least one lengthwise pleat (5) comprises a plurality of lengthwise pleats (5).

6. The micropleated vacuum bag of claim 1, wherein said bag sheet (2) is generally elongated and rectangular.

7. The micropleated vacuum bag of claim 1, wherein said bag sheet (2) comprises nylon.

8. A seal method, comprising:
providing a vacuum bag (1) having bag edges (6);
providing at least one seal ribbon (8) on said vacuum bag (1) along each of the bag edges (6);
forming micropleats (9) by pressing said vacuum bag (1) into said at least one seal ribbon (8) with at least one pleating wheel (17);
providing a curing tool (22);
placing a composite part (24) on the curing tool (22);
placing the vacuum bag (1) over the composite part (24);
sealing the vacuum bag (1) against the curing tool (22) around the composite part (24).

9. The seal method of claim 8, wherein said providing at least one seal ribbon (8) along each edge (6) of said vacuum bag (1) comprises providing a pair of seal ribbons (8) along each edge of said vacuum bag (1).

10. The seal method of claim 8, further comprising providing at least one lengthwise pleat (5) in said vacuum bag (1).

11. The seal method of claim 8, wherein said placing a composite part (24) on said tool (22) comprises placing a composite part (24) having a curvature on said tool (22) and further comprising steering said vacuum bag (1) around said curvature.

## Patentansprüche

1. Mikrogefaltete Vakuumtasche (1), die aufweist:
eine Taschenschicht (2); und
zumindest ein Dichtungsband (8), welches durch die Taschenschickt (2) getragen wird; **gekennzeichnet durch**
eine Vielzahl von Mikrofalten (9), die sich in die Taschenschicht (2) und das zumindest eine Dichtungsband (8) erstrecken, wobei die Vielzahl von Mikrofalten (9) mit einem Faltrad (17) in die Taschenschicht (2) und das zumindest eine Dichtungsband (8) gepresst sind.

2. Mikrogefaltete Vakuumtasche nach Anspruch 1, wobei die Taschenschicht (2) ein Paar von Taschenrändern (6) aufweist, und wobei das zumindest eine Dichtungsband (8) zumindest ein Dichtungsband (8) aufweist, das sich allgemein entlang jeder der Taschenkanten des Paars von Taschenkanten (6) erstreckt.

3. Mikrogefaltete Vakuumtasche nach Anspruch 2, wobei das zumindest eine Dichtungsband (8), das sich allgemein entlang jeder der Taschenkanten (6) des Paars von Taschenkanten (6) erstreckt, ein Paar von Dichtungsbändern (8) aufweist, das sich allgemein entlang jeder der Taschenkanten (6) des Paars von Taschenkanten (6) erstreckt.

4. Mikrogefaltete Vakuumtasche nach Anspruch 1, die des Weiteren zumindest eine Längsfalte (5) aufweist, die in der Taschenschicht (2) vorgesehen ist.

5. Mikrogefaltete Vakuumtasche nach Anspruch 4, wobei die zumindest eine Längsfalte (5) eine Vielzahl von Längsfalten (5) aufweist.

6. Mikrogefaltete Vakuumtasche nach Anspruch 1, wobei die Taschenschicht (2) allgemein gedehnt und rechtwinklig ist.

7. Mikrogefaltete Vakuumtasche nach Anspruch 1, wobei die Taschenschicht (2) Nylon aufweist.

8. Dichtverfahren, das aufweist:
Vorsehen einer Vakuumtasche (1) mit Taschenrändern (6);
Vorsehen von zumindest einem Dichtungsband (8) auf der Vakuumtasche (1) entlang jedes Taschenrands der Taschenränder (6);
Ausbilden von Mikrofalten (9) durch Pressen der Vakuumtasche (1) in das zumindest eine Dichtungsband (8) mit zumindest einem Faltrad (17);
Vorsehen eines Aushärtungswerkzeugs (22);
Platzieren eines Verbundteils (24) auf dem Aushärtungswerkzeug (22);
Platzieren der Vakuumtasche (1) über dem Verbundteil (24);
Abdichten der Vakuumtasche (1) gegen das Aushärtungswerkzeug (22) um das Verbundteil (24) herum.

9. Dichtverfahren nach Anspruch 8, wobei das Vorsehen von zumindest einem Dichtungsband (8) entlang jeder Kante (6) der Vakuumtasche (1) ein Vorsehen eines Paars von Dichtungsbändern (8) entlang jeder Kante der Vakuumtasche (1) aufweist.

10. Dichtverfahren nach Anspruch 8, das des Weiteren ein Vorsehen von zumindest einer Längsfalte (5) in der Vakuumtasche (1) aufweist.

11. Dichtverfahren nach Anspruch 8, wobei das Platzieren eines Verbundteils (24) auf dem Werkzeug (22) ein Platzieren eines Verbundteils (24) mit einer Krümmung auf dem Werkzeug (22) aufweist und des Weiteren ein Lenken der Vakuumtasche (1) um die Krümmung aufweist.

## Revendications

1. Poche à vide à microplis (1), comprenant:
un film de poche (2); et
au moins un ruban de scellement (8) porté par ledit film de poche (2),
**caractérisée par** une pluralité de microplis (9) qui s'étendent dans ledit film de poche (2) et ledit au moins un ruban de scellement (8),
dans laquelle la pluralité de microplis (9) sont pressés dans le film de poche (2) et ledit au moins un ruban de scellement (8) à l'aide d'une roue de plissage (17).

2. Poche à vide à microplis selon la revendication 1, dans laquelle ledit film de poche (2) comprend une paire de bords de poche (6), et ledit au moins un ruban de scellement (8) comprend au moins un ruban de scellement (8) qui s'étend essentiellement le long de chacun de ladite paire de bords de poche (6).

3. Poche à vide à microplis selon la revendication 2, dans laquelle ledit au moins un ruban de scellement (8) qui s'étend essentiellement le long de chacun de ladite paire de bords de poche (6) comprend une paire de rubans de scellement (8) qui s'étendent essentiellement le long de chacun de ladite paire de bords de poche (6).

4. Poche à vide à microplis selon la revendication 1, comprenant en outre au moins un pli dans le sens de la longueur (5) prévu dans ledit film de poche (2).

5. Poche à vide à microplis selon la revendication 4, dans laquelle ledit au moins un pli dans le sens de la longueur (5) comprend une pluralité de plis dans le sens de la longueur (5).

6. Poche à vide à microplis selon la revendication 1, dans laquelle ledit film de poche (2) est essentiellement allongé et rectangulaire.

7. Poche à vide à microplis selon la revendication 1, dans laquelle ledit film de poche (2) comprend du nylon.

8. Procédé de scellement, comprenant:
la fourniture d'une poche à vide (1) présentant des bords de poche (6);
la fourniture d'au moins un ruban de scellement (8) sur ladite poche à vide (1) le long de chacun des bords de poche (6);
la formation de microplis (9) en pressant ladite poche à vide (1) dans ledit au moins un ruban de scellement (8) en utilisant au moins une roue de plissage (17);
la fourniture d'un outil de raidissement (22);
le placement d'une partie composite (24) sur l'outil de raidissement (22);
le placement de la poche à vide (1) sur la partie composite (24); et
le scellement de la poche à vide (1) contre l'outil de raidissement (22) autour de la partie composite (24).

9. Procédé de scellement selon la revendication 8, dans lequel ladite fourniture d'au moins un ruban de scellement (8) le long de chaque bord (6) de ladite poche à vide (1) comprend la fourniture d'une paire de rubans de scellement (8) le long de chaque bord de ladite poche à vide (1).

10. Procédé de scellement selon la revendication 8, comprenant en outre la formation d'au moins un pli dans le sens de la longueur (5) dans ladite poche à vide (1).

11. Procédé de scellement selon la revendication 8, dans lequel ledit placement d'une partie composite (24) sur ledit outil (22) comprend la mise en place d'une partie composite (24) présentant une courbure sur ledit outil (22), et comprend en outre la disposition de ladite poche à vide (1) autour de ladite courbure.
